(19) Europäisches Patentamt
European Patent Office
Office européen des brevets

(11) **EP 4 485 565 A1**

(12) **EUROPEAN PATENT APPLICATION**
published in accordance with Art. 153(4) EPC

(43) Date of publication:
01.01.2025 Bulletin 2025/01

(21) Application number: 23759962.6

(22) Date of filing: 21.02.2023

(51) International Patent Classification (IPC):
H01M 4/134 (2010.01)    H01M 4/36 (2006.01)
H01M 4/38 (2006.01)    H01M 4/62 (2006.01)

(52) Cooperative Patent Classification (CPC):
H01M 4/134; H01M 4/36; H01M 4/38; H01M 4/62;
Y02E 60/10

(86) International application number:
PCT/JP2023/006172

(87) International publication number:
WO 2023/162961 (31.08.2023 Gazette 2023/35)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 25.02.2022 JP 2022027559

(71) Applicant: Panasonic Energy Co., Ltd.
Osaka 570-8511 (JP)

(72) Inventor: URAKI, Yoko
Kadoma-shi
Osaka 571-0057 (JP)

(74) Representative: Novagraaf International SA
Chemin de l'Echo 3
1213 Onex, Geneva (CH)

(54) **NEGATIVE ELECTRODE FOR SECONDARY BATTERIES, AND SECONDARY BATTERY**

(57) The present invention provides a negative electrode for secondary batteries, the negative electrode being capable of suppressing decrease in the charge/discharge cycle characteristics of a battery.

This negative electrode for secondary batteries comprises a negative electrode collector and a negative electrode mixture layer that is formed on the negative electrode collector, while being characterized in that: the negative electrode mixture layer contains a conductive material and a negative electrode active material that contains an Si-containing material; a conductive layer that is covered with a conductive carbon is formed on the surface of the Si-containing material; the coverage of the conductive layer is 30% to 70%; and the conductive material contains carbon nanotubes, each of which has a sulfonic group.

Figure 1

EP 4 485 565 A1

**Description**

TECHNICAL FIELD

The present disclosure relates to a negative electrode for secondary batteries and to a secondary battery.

BACKGROUND

A carbon-based material is generally used for a negative electrode for secondary batteries such as a non-aqueous electrolyte secondary battery, but the use of an Si-containing material for a negative electrode has been studied for increasing the capacity of a battery.

For example, Patent Literature 1 discloses a negative electrode for secondary batteries using, as a negative electrode active material, an Si-containing material containing a lithium silicate phase represented by $Li_{2z}SiO_{(2+z)}$ (0<z<2) and silicon particles dispersed in the lithium silicate phase. For example, Patent Literatures 2 to 4 disclose a negative electrode for secondary batteries containing a negative electrode active material of an Si-containing material and carbon nanotubes, each of which has a functional group such as a carboxyl group (Patent Literatures 2 to 4).

CITATION LIST

PATENT LITERATURE

Patent Literature 1: WO 2016-035290 A
Patent Literature 2: JP 2021-176140 A
Patent Literature 3: JP 2007-242386 A
Patent Literature 4: JP 2009-507338 A

SUMMARY

TECHNICAL PROBLEM

By the way, since the Si-containing material has a large volume change (expansion/contraction) during charging and discharging, the conductive path of a negative electrode mixture layer containing the Si-containing material is cut due to the large volume change of the Si-containing material when charging and discharging are repeated, and there is a problem that charge/discharge cycle characteristics are likely to deteriorate.

Therefore, an object of the present disclosure is to provide a negative electrode for secondary batteries capable of suppressing the deterioration of the charge/discharge cycle characteristics of the battery, and a secondary battery including the negative electrode for secondary batteries.

SOLUTION TO PROBLEM

A negative electrode for secondary batteries according to one aspect of the present disclosure includes a negative electrode collector and a negative electrode mixture layer that is formed on the negative electrode collector, wherein the negative electrode mixture layer contains a conductive agent and a negative electrode active material that contains an Si-containing material, a conductive layer that is covered with conductive carbon is formed on the surface of the Si-containing material, a coverage of the conductive layer is greater than or equal to 30% and less than or equal to 70%, and the conductive agent contains carbon nanotubes, each of which has a sulfonic group.

A secondary battery according to one aspect of the present disclosure includes the negative electrode for above secondary batteries.

ADVANTAGEOUS EFFECTS OF INVENTION

According to the present disclosure, it is possible to provide a negative electrode for secondary batteries capable of suppressing the deterioration of the charge/discharge cycle characteristics of the battery, and a secondary battery including the negative electrode for secondary batteries.

BRIEF DESCRIPTION OF DRAWINGS

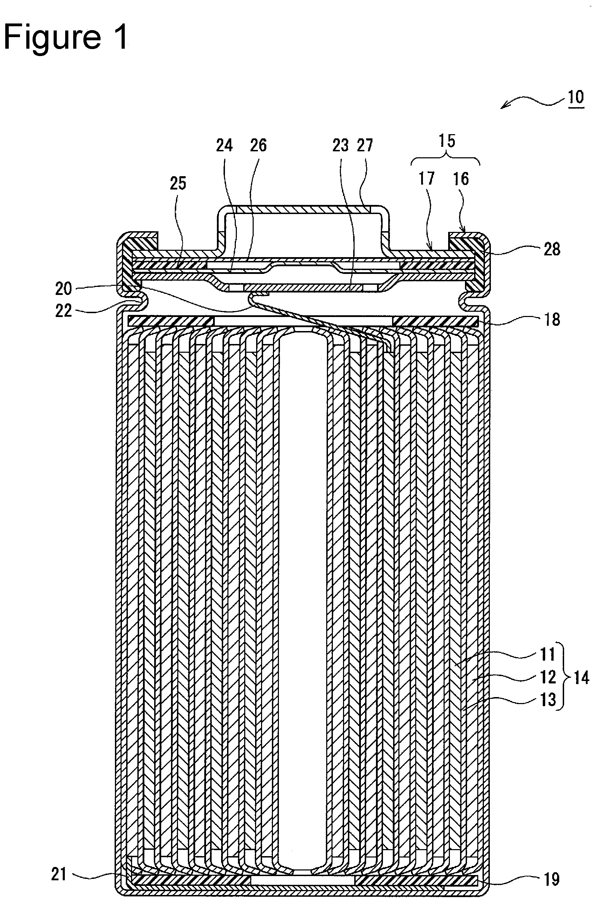

FIG. 1 is a sectional view of a secondary battery of an example of an embodiment.

DESCRIPTION OF EMBODIMENTS

Hereinafter, an example of an embodiment will be described in detail. The drawings referred to in the description of embodiments are schematically illustrated, and dimensional ratios and the like of components drawn in the drawings may be different from actual ones.

FIG. 1 is a schematic cross-sectional view of a secondary battery as an example of an embodiment. A secondary battery 10 illustrated in FIG. 1 includes a wound electrode assembly 14 formed by winding a positive electrode 11 and a negative electrode 12 with a separator 13 interposed between the positive electrode 11 and the negative electrode 12, an electrolyte, insulating plates 18 and 19 that are disposed on upper and lower sides of the electrode assembly 14, respectively, and a battery case 15 housing the above members. The battery case 15 includes a bottomed cylindrical case body 16 and a sealing assembly 17 for closing an opening of the case body 16. Note that, instead of the wound electrode assembly 14, an electrode assembly having another form, such as a stacked electrode assembly in which positive electrodes and negative electrodes are alternately stacked with separators interposed therebetween, may be applied. Examples of the battery case 15 include metal cases having a cylindrical shape, a square shape, a coin shape, a button shape, or the like, and resin cases (so-called laminated type) formed by lamination with a resin sheet.

The electrolyte is, for example, a non-aqueous electrolyte containing a non-aqueous solvent and an electrolyte salt dissolved in the non-aqueous solvent. Examples of the non-aqueous solvent include esters, ethers, nitriles, amides, and mixtures of two or more thereof. The non-aqueous solvent may contain a halogen-substituted product in which at least a part of hydrogen in a solvent described above is substituted with a halogen atom such as fluorine. Examples of the electrolyte salt include lithium salts such as $LiPF_6$. The electrolyte is not limited to a non-aqueous electrolyte, and may be an aqueous electrolyte containing an aqueous solvent. The electrolyte is not limited to a liquid electrolyte, and may be a solid electrolyte in which a gel polymer or the like is used.

The case body 16 is, for example, a bottomed cylindrical metal container. A gasket 28 is provided between the case body 16 and the sealing assembly 17 to ensure the sealability inside the battery. The case body 16 has a projecting portion 22 in which, for example, a part of the side portion of the case body 16 protrudes inward to support the sealing assembly 17. The projecting portion 22 is preferably formed in an annular shape along the circumferential direction of the case body 16, and supports the sealing assembly 17 on its upper surface.

The sealing assembly 17 has a structure in which a filter 23, a lower vent member 24, an insulating member 25, an upper vent member 26, and a cap 27 are sequentially stacked from the electrode assembly 14 side. Each member included in the sealing assembly 17 has, for example, a disk shape or a ring shape, and the members excluding the insulating member 25 are electrically connected to each other. The lower vent member 24 and the upper vent member 26 are connected to each other at their central portions, and the insulating member 25 is interposed between the circumferential portions of the lower vent member 24 and the upper vent member 26. When the internal pressure of the secondary battery 10 increases due to heat generated by an internal short circuit or the like, for example, the lower vent member 24 deforms so as to push the upper vent member 26 up toward the cap 27 side and breaks, and thus the current pathway between the lower vent member 24 and the upper vent member 26 is cut off. When the internal pressure further increases, the upper vent member 26 breaks, and gas is discharged from an opening of the cap 27.

In the secondary battery 10 shown in FIG. 1, a positive electrode lead 20 attached to the positive electrode 11 extends to the sealing assembly 17 side through a through hole of the insulating plate 18, and a negative electrode lead 21 attached to the negative electrode 12 extends to the bottom side of the case body 16 through the outside of the insulating plate 19. The positive electrode lead 20 is connected to the lower surface of the filter 23, which is the bottom plate of the sealing assembly 17, by welding or the like, and the cap 27, which is electrically connected to the filter 23 and is the top plate of the sealing assembly 17, serves as a positive electrode terminal. The negative electrode lead 21 is connected to the bottom inner surface of the case body 16 by welding or the like, and the case body 16 serves as a negative electrode terminal.

Hereinafter, the positive electrode 11, the negative electrode 12, and the separator 13 will be described in detail.

[Positive Electrode]

The positive electrode 11 includes a positive electrode current collector and a positive electrode mixture layer disposed on the positive electrode current collector. As the positive electrode current collector, a foil of a metal, such as aluminum or an aluminum alloy, that is stable in a potential range of the positive electrode, a film in which the metal is disposed on its surface layer, or the like can be used. The positive electrode mixture layer contains, for example, a positive electrode active material, a binder, a conductive agent, and the like. The positive electrode mixture layer is preferably formed on both surfaces of the positive electrode current collector. The positive electrode 11 can be manufactured by, for example, applying a positive electrode mixture slurry containing a positive electrode active material, a binder, a conductive agent, and the like onto the positive electrode current collector, and drying and rolling the coating film to form the positive electrode mixture layer on the positive electrode current collector.

The positive electrode active material is, for example, a lithium composite oxide capable of reversibly inserting and releasing lithium. Examples of the metal element included in the lithium composite oxide include Ni, Co, Mn, Al, B, Mg, Ti, V, Cr, Fe, Cu, Zn, Ga, Sr, Zr, Nb, In, Sn, Ta, and W. Among them, it is preferable to include at least one of Ni, Co, and Mn. A suitable example of the lithium composite oxide is a composite oxide represented by a general formula $LiMO_2$ (where M is Ni and X, X is a metal element other than Ni, and the ratio of Ni is greater than or equal to 50 mol% and less than or equal to 95 mol% based on the total number of moles of the metal element excluding Li). Examples of X in the above formula include Co, Mn, Al, B, Mg, Ti, V, Cr, Fe, Cu, Zn, Ga, Sr, Zr, Nb, In, Sn, Ta, and W.

Examples of the conductive agent contained in the positive electrode mixture layer include fibrous carbon such as carbon black, acetylene black, Ketjenblack, graphene, or carbon nanotubes, and a carbon material such as graphite. Examples of the binder contained in the positive electrode mixture layer include a fluororesin such as polytetrafluoroethylene (PTFE) or polyvinylidene fluoride (PVdF), polyacrylonitrile (PAN), a polyimide-based resin, an acrylic resin, a polyolefin-based resin, styrenebutadiene rubber (SBR), carboxymethyl cellulose (CMC) or a salt thereof, polyacrylic acid (PAA) or a salt thereof (PAA-Na, PAA-K, or the like, or a partially neutralized salt may be used), polyethylene oxide (PEO), and polyvinyl alcohol (PVA).

[Negative Electrode]

The negative electrode 12 includes a negative electrode current collector and a negative electrode mixture layer disposed on the negative electrode current collector. As the negative electrode current collector, for example, a foil of a metal, such as copper or a copper alloy, that is stable in a potential range of the negative electrode, a film in which the metal is disposed on its surface layer, or the like can be used.

The negative electrode mixture layer contains a conductive agent and a negative electrode active material containing an Si-containing material. The conductive agent contains carbon nanotubes, each of which has a sulfonic group. The negative electrode mixture layer may further contain a binder and the like.

The negative electrode 12 can be manufactured by, for example, applying a negative electrode mixture slurry containing a negative electrode active material, a conductive agent, a binder, and the like to the negative electrode current collector, and drying and rolling the applied film to form the negative electrode mixture layer on the negative electrode current collector.

Examples of the Si-containing material as the negative electrode active material include Si particles, alloy particles containing Si, and composite particles containing Si. These Si-containing materials may be used alone or in combination of two or more thereof.

The Si particles are generally obtained by a gas phase method or by pulverizing silicon chips, but may be manufactured by any method. Examples of the alloy particles containing Si include alloys containing Si and a metal selected from alkali metals, alkaline earth metals, transition metals, rare earth metals, and combinations thereof.

The composite particles containing Si include, for example, a lithium ion conductive phase and Si particles dispersed in the lithium ion conductive phase. The lithium ion conductive phase is, for example, at least one selected from a silicon oxide phase, a silicate phase, and a carbon phase.

The silicate phase preferably includes, for example, at least one element selected from lithium, sodium, potassium, rubidium, cesium, francium, beryllium, magnesium, calcium, strontium, barium, and radium from the viewpoints of high lithium ion conductivity and the like. Among the silicate phases, a silicate phase including lithium (hereinafter, may be referred to as a lithium silicate phase) is preferable from the viewpoints of high lithium ion conductivity and the like.

The lithium silicate phase is represented by, for example, the formula: $Li_{2z}SiO_{2+z}$ ($0<z<2$). From the viewpoints of stability, ease of production, lithium ion conductivity, and the like, z preferably satisfies the relation of $0<z<1$, and more preferably $z=1/2$.

The composite particles in which Si particles are dispersed in a silicon oxide phase are represented by, for example, a general formula $SiO_x$ (wherein x is preferably in the range of $0<x<2$, and more preferably in the range of $0.5 \leq x \leq 1.6$). The composite particles in which Si particles are dispersed in a carbon phase are represented by, for example, a general formula $Si_xC_y$ (in which ranges of $0<x \leq 1$ and $0<y \leq 1$ are preferable).

The content of the Si particles constituting the composite particles is, for example, greater than or equal to 30% by mass and less than or equal to 80% by mass, greater than or equal to 35% by mass and less than or equal to 75% by mass, or greater than or equal to 55% by mass and less than or equal to 70% by mass. The content of the Si particles can be measured by Si-NMR.

(Measurement conditions of Si-NMR)

Measuring device: solid-state nuclear magnetic resonance spectrometer (INOVA-400) manufactured by Varian Medical Systems, Inc.
Probe: Varian 7 mm CPMAS-2
MAS: 4.2 kHz
MAS rate: 4 kHz
Pulse: DD (45° pulse+signal acquisition time 1H decoupling)
Repetition time: 1200 sec
Observation width: 100 kHz
Observation center: approximately -100 ppm
Signal acquisition time: 0.05 sec
Number of scans: 560
Sample weight: 207.6 mg

The crystallite size of the Si particles constituting the composite particles is, for example, greater than or equal to 10 nm and less than or equal to 30 nm or greater than or equal to 15 nm and less than or equal to 25 nm. The crystallite size of the Si particles is calculated by the Scherrer equation from the half width of the analysis peak attributed to the Si (111) plane of the X-ray diffraction pattern of the Si particle.

The average particle diameter of the Si particles constituting the composite particles is, for example, less than or equal to 500 nm before the first charge, and is, for example, less than or equal to 400 nm after the first charge. The average particle diameter of the Si particles is a value obtained by observing the cross section of the composite particles with a scanning electron microscope (SEM) and averaging the maximum diameters of 100 arbitrary Si particles.

A conductive layer coated with conductive carbon is formed on the surface of the Si-containing material. The coverage of the conductive layer formed on the surface of the Si-containing material is preferably in the range of greater than or equal to 30% and less than or equal to 70%, and more preferably in the range of greater than or equal to 40% and less than or equal to 60%. It is presumed that when the coverage of the conductive layer is less than 30%, the conductivity of the Si-containing material itself is reduced as compared with the case where the coverage is in the range of greater than or equal to 30% and less than or equal to 70%. It is presumed that when the coverage of the conductive layer exceeds 70%, the carbon nanotubes to be described later are less likely to be adsorbed to the Si-containing material, and the resistance between particles of the Si-containing material increases, as compared with the case where the coverage is in the range of greater than or equal to 30% and less than or equal to 70%. In any case, it is considered that the conductive path of the negative electrode mixture layer is easily cut by the volume change of the Si-containing material due to repetition of charge/discharge, leading to the deterioration of charge/discharge cycle characteristics.

The conductive layer can be formed with, for example, a CVD method in which acetylene, methane, or the like is used, a method in which coal pitch, petroleum pitch, a phenol resin, or the like is mixed with a silicon-based active material and the mixture is heat-treated, or the like. As a heat treatment apparatus that performs heat treatment, for example, a hot air furnace, a hot press, a lamp, a sheath heater, a ceramic heater, a rotary kiln, or the like can be used. The conductive layer may be formed by fixing a conductive filler such as carbon black to the particle surface of the Si-containing material using a binder. For the adjustment of the coverage of the conductive layer, for example, the treatment time may be controlled in the case of the CVD method, and for example, the firing time and the firing temperature may be controlled in the case of the heat treatment.

The coverage of the conductive layer can be measured by X-ray photoelectron spectroscopy (XPS).

(Measurement Conditions of XPS)
Device: PHI Quantera SXM manufactured by ULVAC-PHI, Inc.
X-ray source: Al-mono, 15 kV/25 W
Analysis area: 300 μm × 800 μm
Photoelectron take-off angle: 45°
Neutralization condition: electrons and floating ions
Pass energy: 55 eV
Measurement time: 60 ms/step

The coverage of the conductive layer can be calculated by performing XPS measurement under the above measurement conditions and, for example, applying the detected atomic concentrations (at%) of C, Li, and Si to the following formula.

Coverage of conductive layer (%)=C (at%)/(C (at%)+Li (at%)+Si (at%))

The negative electrode active material preferably contains a negative electrode material having a smaller degree of expansion and contraction during charging and discharging than that of the Si-containing material. The negative electrode material preferably contains a carbon material capable of reversibly inserting and removing lithium. Examples of the carbon material include graphite, graphitizable carbon, and non-graphitizable carbon. Among them, graphite having excellent charge-discharge stability and a small irreversible capacity is preferable. The graphite is a material having graphite crystals, and examples of the graphite include natural graphite, artificial graphite, and graphitized mesophase-carbon particles.

The content of the Si-containing material is preferably in the range of greater than or equal to 1% by mass and less than or equal to 15% by mass with respect to the total mass of the negative electrode active material, for example, from the viewpoint of increasing the capacity of the battery, suppressing a decrease in charge/discharge cycle characteristics, and the like. The content of the carbon material used as the negative electrode active material is preferably greater than or equal to 85% by mass and less than or equal to 99% by mass with respect to the total mass of the negative electrode active material. The content of the negative electrode active material may be, for example, greater than or equal to 85% by mass, greater than or equal to 90% by mass, or greater than or equal to 95% by mass with respect to the total amount of the negative electrode mixture layer.

The conductive agent contained in the negative electrode mixture layer contains carbon nanotubes, each of which has a sulfonic group. When the negative electrode mixture layer is formed, it is considered that the sulfone group of the carbon nanotubes interacts with the exposed portion of the Si-containing material which is not covered with the conductive layer, and the carbon nanotubes, each of which has a sulfonic group is selectively adsorbed to the exposed portion of the Si-containing material. Accordingly, it is considered that even when a large volume change occurs in the Si-containing material due to repetition of charge/discharge, cutting of the conductive path of the negative electrode mixture layer is suppressed, and the deterioration of charge/discharge cycle characteristics is suppressed. As described above, when the coverage of the conductive layer exceeds 70%, the exposed portion of the Si-containing material is decreased, and the carbon nanotubes adsorbed to the exposed portion are reduced, leading to the deterioration of charge/discharge cycle characteristics.

Examples of the carbon nanotubes include single-walled carbon nanotubes, double-walled carbon nanotubes, and multi-walled carbon nanotubes. The single-walled carbon nanotube (SWCNT) is a carbon nanostructure in which one layer of graphene sheets forms one cylindrical shape, the double-walled carbon nanotube is a carbon nanostructure in which two layers of graphene sheets are concentrically laminated to form one cylindrical shape, and the multi-walled carbon nanotube is a carbon nanostructure in which three or more layers of graphene sheets are concentrically laminated to form one cylindrical shape. The graphene sheet refers to a layer in which a carbon atom in an sp2 hybrid orbital forming a crystal of graphite is located at an apex of a regular hexagon. The shape of the carbon nanotube is not limited, and examples thereof include shapes such as a needle shape, a cylindrical tube shape, a fishbone shape (fishbone or cup-stacked type), a trump shape (platelet), and a coil shape.

The fiber length of the carbon nanotube is, for example, preferably greater than or equal to 0.5 $\mu$m and less than or equal to 500 $\mu$m, and more preferably greater than or equal to 1 $\mu$m and less than or equal to 100 $\mu$m, from the viewpoint of further suppressing the deterioration of charge/discharge cycle characteristics. The fiber length of the carbon nanotube can be determined by measuring the lengths of 50 arbitrary carbon nanotubes with a field-emission scanning electron microscope (FE-SEM) and arithmetically averaging the lengths.

The outermost peripheral diameter of the carbon nanotube is, for example, preferably greater than or equal to 0.5 nm and less than or equal to 20 nm, and more preferably greater than or equal to 1 nm and less than or equal to 10 nm, from the viewpoint of further suppressing the deterioration of charge/discharge cycle characteristics. The outermost peripheral diameter of the carbon nanotube can be determined by measuring the outer diameters of 50 arbitrary carbon nanotubes with a field-emission scanning electron microscope (FE-SEM) or a transmission electron microscope (TEM) and arithmetically averaging the outer diameters.

The amount of sulfone groups in the carbon nanotubes is preferably, for example, greater than or equal to 0.01 and less than or equal to 0.25 mmol/g from the viewpoint of adsorbability to the exposed portion of the Si-containing material, and the like.

The method for imparting a sulfone group to the carbon nanotubes is not particularly limited, but for example, the sulfone group can be imparted to the carbon nanotubes by adding the carbon nanotubes to a mixed acid of sulfuric acid and nitric acid and reacting the carbon nanotubes for a predetermined time. During the reaction, it is desirable to stir the mixed acid. The reaction time is not particularly limited, but is desirably, for example, greater than or equal to 1 hour. The reaction temperature is not particularly limited, but is desirably in the range of greater than or equal to 20°C and less than or equal to 45°C.

The analysis of the sulfone group imparted to the carbon nanotubes can be performed by TPD-MS (heating evolved gas analysis).

(Measurement Conditions of TPD-MS)
Measuring apparatus: gas chromatograph mass spectrometer (GC portion: 7890 manufactured by Agile Technologies, MS portion: MS-60030BU)
Temperature condition: increase in temperature from 100°C to 1000°C at 20°C/min, and holding for 10 minutes
Carrier gas: Helium
Flow rate: 50 mL/min
Measured mass number: m/z = greater than or equal to 10 and less than or equal to 600

The content of the carbon nanotubes is, for example, preferably greater than or equal to 0.01% by mass and less than or equal to 1% by mass, and more preferably greater than or equal to 0.01% by mass and less than or equal to 0.1% by mass, with respect to the total mass of the negative electrode active material from the viewpoint of further suppressing the deterioration of charge/discharge cycle characteristics, and the like.

The conductive agent may contain a conductive agent other than carbon nanotubes in addition to the carbon nanotubes. Examples of the conductive agent other than carbon nanotubes include carbon black, acetylene black, and Ketjenblack.

Examples of the binder include the binders exemplified for the positive electrode 11. A content of the binder is, for example, in a range of greater than or equal to 0.5% by mass and less than or equal to 10% by mass with respect to the total mass of the negative electrode active material.

[Separator]

For example, a porous sheet having an ion permeation property and an insulation property is used for the separator 13. Specific examples of the porous sheet include fine porous thin films, woven fabrics, and nonwoven fabrics. As the material of the separator 13, olefin-based resins such as polyethylene, polypropylene, and copolymers containing at least one of ethylene and propylene, cellulose, and the like are suitable. The separator 13 may have a single-layered structure or a multilayered structure. On the surface of the separator 13, a heat-resistant layer or the like may be formed.

EXAMPLES

Hereinafter, the present disclosure will be further described with reference to Examples. However, the present disclosure is not limited to these Examples.

<Example 1>

[Production of Si-Containing Material]

Silicon dioxide and lithium carbonate were mixed so that the atomic ratio Si/Li was 1.05, and this mixture was fired in air at 950°C for 10 hours to obtain lithium silicate represented by $Li_2Si_2O_5$. This lithium silicate was pulverized so as to have an average particle size of 10 $\mu$m.

The above lithium silicate and the silicon powder were mixed at a mass ratio of 50:50. The mixture was filled in a pot of a planetary ball mill, 24 balls made of SUS (diameter: 20 mm) were put in the pot, and the mixture was pulverized at 200 rpm for 50 hours in an inert atmosphere. Next, the pulverized mixture was pressurized by a hot press in an inert atmosphere, and fired at 800°C for 4 hours in a pressurized state to obtain an Si-containing material. This Si-containing material was pulverized and passed through a 40 $\mu$m mesh.

The obtained Si-containing material and coal pitch were mixed, and the mixture was fired at 800°C in an inert atmosphere to form a conductive layer coated with conductive carbon on the surface of the Si-containing material. The Si-containing material on which the conductive layer was formed was sieved to adjust the average particle size to 5 $\mu$m. The coating amount of the conductive layer was 5% by mass with respect to the total mass of the Si-containing material and the conductive layer.

The coverage of the conductive layer measured by XPS was 45%. The content of Si particles measured by Si-NMR was 50% by mass.

[Production of Carbon Nanotubes Each Having Sulfone Group]

Carbon nanotubes each having a fiber length of 5 $\mu$m and an outermost peripheral diameter of 2 $\mu$m were put into a mixed acid of sulfuric acid/nitric acid, and stirred at 40°C for 12 hours. After the treatment, the resultant was filtered through a glass filter, and the carbon nanotubes remaining on the glass filter were washed with pure water and then naturally dried overnight. The sample after drying was analyzed by TPD-MS, and a sulfone group was confirmed. Therefore, in Examples, the above sample was used as carbon nanotubes each having a sulfonic group.

[Production of Negative Electrode]

The Si-containing material on which the conductive layer was formed and graphite were mixed at a mass ratio of 8:92. This mixture was used as a negative electrode active material. The negative electrode active material, the carbon nanotubes each having a sulfonic group, sodium carboxymethylcellulose, and styrene butadiene rubber were mixed at a mass ratio of 100:0.02: 1.0: 1.0. An appropriate amount of water was added to the mixture to prepare a negative electrode mixture slurry. The negative electrode mixture slurry was applied onto both surfaces of a negative electrode current collector formed of a copper foil having a thickness of 10 $\mu$m, and the coating film was dried. The dried coating film using a rolling roller was rolled to produce a negative electrode in which a negative electrode mixture layer was formed on each of both the surfaces of the negative electrode current collector.

[Preparation of Electrolytic Solution]

Ethylene carbonate (EC) and methylethyl carbonate (MEC) were mixed at a volume ratio of 30:70. LiPF$_6$ was dissolved in the mixed solvent so as to have a concentration of 1.4 mol/L. Furthermore, 2% by mass of vinylene carbonate (VC) was dissolved with respect to the total amount of the electrolytic solution. This was used as an electrolytic solution in Examples.

[Production of Non-Aqueous Electrolyte Secondary Battery]

A separator formed of a polyethylene microporous film was disposed between the metal Li and the negative electrode, and these were wound and then molded into a flat shape to produce a winding-type electrode assembly. After the electrode assembly and the above electrolytic solution were housed in an outer case made of an aluminum laminate, the inside of the outer case was depressurized to impregnate the separator with the electrolytic solution, and then the opening of the outer case was sealed to produce a secondary battery.

<Example 2>

A secondary battery was produced in the same manner as in Example 1 except that in the production of a negative electrode, a negative electrode active material, carbon nanotubes each having a sulfonic group, sodium carboxymethylcellulose, and styrenebutadiene rubber were mixed at a mass ratio of 100:0.01:1.0:1.0.

<Example 3>

A secondary battery was produced in the same manner as in Example 1 except that in the production of a negative electrode, a negative electrode active material, carbon nanotubes each having a sulfonic group, sodium carboxymethylcellulose, and styrenebutadiene rubber were mixed at a mass ratio of 100:0.03:1.0:1.0.

<Example 4>

An Si-containing material having the coverage of a conductive layer of 30% was produced by adjusting firing conditions and the like. A secondary battery was produced in the same manner as in Example 1 except that the Si-containing material was used.

<Example 5>

An Si-containing material having the coverage of a conductive layer of 70% was produced by adjusting firing conditions and the like. A secondary battery was produced in the same manner as in Example 1 except that the Si-containing material was used.

<Comparative Example 1>

A secondary battery was produced in the same manner as in Example 1 except that carbon nanotubes were not used in the production of a negative electrode.

<Comparative Example 2>

A secondary battery was produced in the same manner as in Example 1 except that carbon nanotubes to which a sulfone group was not imparted were used in the production of a negative electrode.

<Comparative Example 3>

A secondary battery was produced in the same manner as in Example 3 except that carbon nanotubes to which a sulfone group was not imparted were used in the production of a negative electrode.

<Comparative Example 4>

An Si-containing material in which the coverage of a conductive layer was 25% was produced by adjusting the coating amount of the conductive layer and the like. A secondary battery was produced in the same manner as in Example 1 except that the Si-containing material was used.

<Comparative Example 5>

An Si-containing material having the coverage of a conductive layer of 75% was produced by adjusting firing conditions and the like. A secondary battery was produced in the same manner as in Example 1 except that the Si-containing material was used.

<Comparative Example 6>

A secondary battery was produced in the same manner as in Example 1 except that carbon nanotubes each having a sulfonic group instead of a sulfone group were used.

[Charge/Discharge Cycle Test]

The secondary battery of each of Examples and Comparative Examples was subjected to constant current charge (a current of 0.1 It and an end voltage of 0.005 V) and then subjected to constant voltage charge (a voltage of 0.005 V and an end current of 0.01 It) in a temperature environment of 25°C. Thereafter, the battery was subjected to constant current discharge (a current of 0.1 It and an end voltage of 1.5 V). The charge/discharge was defined as one cycle, and 10 cycles were performed. A capacity retention rate during the charge/discharge cycle of the secondary battery of each of Examples and Comparative Examples was calculated using the following formula. Note that as the capacity retention rate is higher, the deterioration of the cycle characteristics is more suppressed.

Capacity retention rate (%)=(discharge capacity at 10th cycle/discharge capacity at 1st cycle)×100

Table 1 summarizes the test results for each of Examples and Comparative Examples. However, the capacity retention ratio indicates the results of other Examples and Comparative Examples with the result of Example 1 as a reference (100%).

[Table 1]

| | Carbon nanotubes | | Si-containing material | Capacity retention rate |
|---|---|---|---|---|
| | Sulfonic group | Content | Coverage of conductive layer | |
| Example 1 | Yes | 0.02wt% | 45% | 100.0% |
| Example 2 | Yes | 0.01wt% | 45% | 99.9% |
| Example 3 | Yes | 0.03wt% | 45% | 100.1% |
| Example 4 | Yes | 0.02wt% | 30% | 99.7% |
| Example 5 | Yes | 0.02wt% | 70% | 99.1% |
| Comparative Example 1 | No | - | 45% | 93.7% |
| Comparative Example 2 | No | 0.02wt% | 45% | 98.3% |

(continued)

| | Carbon nanotubes | | Si-containing material | Capacity retention rate |
| --- | --- | --- | --- | --- |
| | Sulfonic group | Content | Coverage of conductive layer | |
| Comparative Example 3 | No | 0.03wt% | 45% | 98.7% |
| Comparative Example 4 | Yes | 0.02wt% | 20% | 97.5% |
| Comparative Example 5 | Yes | 0.02wt% | 75% | 98.3% |
| Comparative Example 6 | No (With carboxyl group) | 0.02wt% | 45% | 98.8% |

Examples 1 to 5 showed a higher capacity retention ratio than that of Comparative Examples 1 to 6. Thus, by using, as the negative electrode active material, a negative electrode containing a negative electrode active material containing an Si-containing material on which a conductive layer of conductive carbon having a coverage of greater than or equal to 30% and less than or equal to 70% is formed and a conductive agent containing carbon nanotubes each having a sulfonic group, the deterioration of charge/discharge cycle characteristics can be suppressed.

REFERENCE SIGNS LIST

10      secondary battery

11      Positive electrode

12      Negative electrode

13      Separator

14      Electrode assembly

15      Battery case

16      Case body

17      Sealing assembly

18, 19      Insulating plate

20      Positive electrode lead

21      Negative electrode lead

22      Projecting portion

23      Filter

24      Lower vent member

25      Insulating member

26      Upper vent member

27      Cap

28      Gasket

**Claims**

1. A negative electrode for secondary batteries comprising a negative electrode collector and a negative electrode mixture layer that is formed on the negative electrode collector, wherein

   the negative electrode mixture layer contains a conductive agent and a negative electrode active material that contains an Si-containing material,
   a conductive layer that is covered with conductive carbon is formed on a surface of the Si-containing material, a coverage of the conductive layer is greater than or equal to 30% and less than or equal to 70%, and
   the conductive agent contains carbon nanotubes, each of which has a sulfonic group.

2. The negative electrode for secondary batteries according to claim 1, wherein the Si-containing material contains composite particles having a lithium silicate phase and Si particles dispersed in the lithium silicate phase.

3. The negative electrode for secondary batteries according to claim 1 or 2, wherein a coverage of the conductive layer is greater than or equal to 40% and less than or equal to 50%.

4. The negative electrode for secondary batteries according to any one of claims 1 to 3, wherein the carbon nanotubes have a fiber length greater than or equal to 0.5 $\mu$m and less than or equal to 500 $\mu$m.

5. The negative electrode for secondary batteries according to any one of claims 1 to 4, wherein the carbon nanotubes have an outermost peripheral diameter greater than or equal to 0.5 nm and less than or equal to 20 nm.

6. The negative electrode for secondary batteries according to any one of claims 1 to 5, wherein

   the negative electrode active material contains a carbon material, and
   a content of the carbon nanotubes is greater than or equal to 0.01% by mass and less than or equal to 1.0% by mass with respect to a total mass of the negative electrode active material.

7. A secondary battery comprising the negative electrode for secondary batteries according to any one of claims 1 to 6.

# Figure 1

<div align="center">

**INTERNATIONAL SEARCH REPORT**

</div>

| | International application No. |
|---|---|
| | **PCT/JP2023/006172** |

**A. CLASSIFICATION OF SUBJECT MATTER**

*H01M 4/134*(2010.01)i; *H01M 4/36*(2006.01)i; *H01M 4/38*(2006.01)i; *H01M 4/62*(2006.01)i
FI: H01M4/134; H01M4/36 A; H01M4/36 C; H01M4/36 E; H01M4/38 Z; H01M4/62 Z

According to International Patent Classification (IPC) or to both national classification and IPC

**B. FIELDS SEARCHED**

Minimum documentation searched (classification system followed by classification symbols)

H01M4/00-62

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2014/148043 A1 (SANYO ELECTRIC CO., LTD.) 25 September 2014 (2014-09-25) claims, examples, paragraphs [0004], [0005], [0015] | 1-7 |
| Y | JP 2022-500835 A (NINGDE AMPEREX TECHNOLOGY LTD.) 04 January 2022 (2022-01-04) claims, paragraph [0055] | 1-7 |

☐ Further documents are listed in the continuation of Box C. ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **12 April 2023** | **25 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/006172**

| Patent document cited in search report | | | Publication date (day/month/year) | Patent family member(s) | | | Publication date (day/month/year) |
|---|---|---|---|---|---|---|---|
| WO | 2014/148043 | A1 | 25 September 2014 | US | 2016/0049639 | A1 | |
| | | | | claims, examples, paragraphs [0004], [0005], [0015] | | | |
| | | | | CN | 105074973 | A | |
| JP | 2022-500835 | A | 04 January 2022 | US | 2022/0052320 | A1 | |
| | | | | claims, paragraph [0061] | | | |
| | | | | WO | 2020/186799 | A1 | |
| | | | | EP | 3942628 | A1 | |
| | | | | CN | 109980199 | A | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016035290 A
- JP 2021176140 A
- JP 2007242386 A
- JP 2009507338 A